# EUROPEAN PATENT SPECIFICATION

(11) **EP 3 685 655 B1**
(45) Date of publication and mention of the grant of the patent: **19.01.2022**
(21) Application number: 18915790.2
(22) Date of filing: 30.11.2018
(51) Int. Cl.: A01D 34/90, A45F 3/14, A01D 34/00, A45F 3/12

(54) **WORK MACHINE PAD**
KISSEN FÜR ARBEITSMASCHINE
TAMPON POUR MACHINE DE TRAVAIL

(43) Date of publication of application: 29.07.2020
(73) Proprietor: Honda Motor Co., Ltd., Tokyo 107-8556 (JP)
(72) Inventor: HASEGAWA, Tetsuya, Wako-shi, Saitama 351-0193 (JP)
(74) Representative: Kiwit, Benedikt
(86) International application number: PCT/JP2018/044249
(87) International publication number: WO 2020/110305

(56) References cited:
- EP-A1- 1 661 446
- JP-A- H07 265 114
- JP-A- 2004 156 810
- JP-A- 2005 143 453
- JP-B2- 5 788 768
- JP-B2- H0 761 290
- JP-Y2- H0 130 114
- US-A1- 2004 226 972
- US-B1- 6 189 158
- US-B2- 7 163 132

## Description

### TECHNICAL FIELD

The present invention relates to a working machine pad.

### BACKGROUND ART

As a working machine support belt for supporting a working machine, such as a mowing machine, with an upper body of a user, there is a technology including a working machine pad interposed between the working machine and the thigh of an operator (JP H10-98 930 A).

The working machine pad of JP H10 - 98 930 A is interposed between the working machine and the thigh of the operator such that a load or vibration of working machinery does not directly act on the thigh of the operator.

EP 16 614 46 A1 discloses a working machine pad similar to that of the present invention.

### SUMMARY OF THE INVENTION

### PROBLEMS TO BE SOLVED BY THE INVENTION

However, the working machine pad of JP H10 - 98 930 A has room for improvement in reducing the load on an operator.

The present invention provides a working machine pad that can reduce a load on an operator.

### MEANS FOR SOLVING THE PROBLEMS

According to a first aspect of the present invention, there is provided a working machine pad (working machine pad 16) provided in a working machine support belt (working machine support belt 1) so as to be interposed between a thigh of an operator (operator P) and a working machine, including: a plate portion (plate portion 41) disposed on the working machine side; a cushion portion (cushion portion 42) disposed on the operator side and softer than the plate portion; and a hook (hook 15) fixed to the plate portion and capable of locking the working machine, in which the cushion portion includes a soft cushion portion (soft cushion portion 44), and a hard cushion portion (hard cushion portion 45) harder than the soft cushion portion, and in which the soft cushion portion is disposed between the plate portion and the hard cushion portion, and the plate portion is made of resin, and the soft cushion portion and the hard cushion portion are made of sponge.

According to a second aspect, in addition to the first aspect, the hard cushion portion may be thinner than the soft cushion portion.

According to a third aspect, in addition to any one of the first to second aspect, the hard cushion portion may be larger than the soft cushion portion, and the hard cushion portion and the plate portion may be stitched to each other.

According to a fourth aspect, in addition to the third aspect, the cushion portion may further include a first covering member (first covering member 46) that covers an outer surface of the soft cushion portion, and a second covering member (second covering member 47) that covers an outer surface of the hard cushion portion.

According to a fifth aspect, in addition to the fourth aspect, the cushion portion may further include a third covering member (third covering member 48) having a substantially U-shaped section and interposing outer edge portions of the hard cushion portion, the first covering member, and the second covering member, and the hard cushion portion, the first covering member, the second covering member, and the third covering member may be stitched to each other.

According to a sixth aspect, in addition to the fifth aspect, a stitching portion (stitching portion 49) of the hard cushion portion and the plate portion may substantially have the same position as a stitching portion (stitching portion 50) of the hard cushion portion, the first covering member, the second covering member, and the third covering member.

According to a seventh aspect, in addition to the sixth aspect, the stitching portions of the hard cushion portion and the plate portion may be provided in an upper portion and a lower portion of the working machine pad to avoid a center portion (center portion 16c) of the working machine pad in an up-down direction.

According to an eighth aspect, in addition to any one of the first to seventh aspect, when viewed from the working machine side, the plate portion may include a first forward slope surface (first forward slope surface 41a) that slopes forward as going downward, a second forward slope surface (second forward slope surface 41b) that slopes rearward as going downward, a forward bent portion (forward bent portion 41c) that connects the first forward slope surface and the second forward slope surface to each other, a first rearward surface (first rearward surface 41d) that extends substantially linearly downward, a second rearward slope surface (second rearward slope surface 41e) that slopes forward as going downward, and a rearward bent portion (rearward bent portion 41f) that connects the first rearward surface and the second rearward slope surface to each other, wherein the forward bent portion may be positioned below the rearward bent portion, and the second rearward slope surface may have a steeper slope than the first forward slope surface.

### ADVANTAGEOUS EFFECTS OF THE INVENTION

According to the working machine pad of the present invention (i.e. according to the first aspect), since the hard plate portion positioned on the working machine side and the soft cushion portion positioned on the operator side are provided, the load or vibration of the working machine can be received by the plate portion, and the cushion portion can protect the thigh. In other words, since the cushion portion deforms along the shape of the thigh while reducing the load or vibration of the working machine, the load on the operator can be reduced. In addition, the working machine pad has a three-layer structure of a hard plate portion, a soft cushion portion, and a hard cushion portion, and thus, while ensuring durability of the working machine pad, both the vibration absorption performance and followability which are the characteristics that conflict with each other can be realized. Moreover, weight reduction and low cost can be realized by making the plate portion with resin and making the soft cushion portion and the hard cushion portion with sponge.

According to the second aspect, in addition to the first aspect, both the vibration absorption performance and the followability can be more effectively realized by making the hard cushion portion thinner than the soft cushion portion.

According to the third aspect, in addition to any one of the first to second aspect, by making the hard cushion portion larger than the soft cushion portion, and stitching the hard cushion portion and the plate portion to each other, the followability to the working machine is improved.

According to the fourth aspect, in addition to the third aspect, by covering the outer surface of the soft cushion portion with the first covering member, and by covering the outer surface of the hard cushion portion with the second covering member, the deterioration of the soft cushion portion and the hard cushion portion can be suppressed.

According to the fifth aspect, in addition to the fourth aspect, by interposing the outer edge portions of the hard cushion portion, the first covering member, and the second covering member with the third covering member, and by stitching the members, the strength of the end portion of the hard cushion portion can be improved, and the durability of the working machine pad can be improved.

According to the sixth aspect, in addition to the fifth aspect, the deterioration of the design can be suppressed by setting the stitching portions at the same position.

According to the seventh aspect, in addition to the sixth aspect, by avoiding the center portion of the working machine pad that comes into contact with the working machine, and by setting the stitching portion of the hard cushion portion and the plate portion in the upper portion and the lower portion of the working machine pad, the deterioration of the stitching portion can be suppressed.

According to the eighth aspect, in addition to any one of the first to seventh aspect, in a case of a working machine provided with a handle for both hands at a front part, and in a case of a working machine provided with a handle for one hand at a front part and helped by the other hand at a rear part, the working machine pad can be commonly used.

### BRIEF DESCRIPTION OF THE DRAWINGS

Fig. 1 is a perspective view illustrating a wearing state of a working machine support belt including a working machine pad according to an embodiment of the present invention.
Fig. 2 is a front view illustrating a wearing state of the working machine support belt including the working machine pad according to the embodiment of the present invention.
Fig. 3 is a rear view of the working machine support belt including the working machine pad according to the embodiment of the present invention.
Fig. 4 is a view illustrating the working machine pad, a front support band, and a rear support band in the working machine support belt illustrated in Fig. 3.
Fig. 5 is a sectional view taken along line A-A of Fig. 4.
Fig. 6 is a sectional view of a cushion portion for describing a method for manufacturing the cushion portion in the working machine pad according to the embodiment of the present invention.
Fig. 7 is a back surface view of the working machine pad illustrated in Fig. 4.

### MODES FOR CARRYING OUT THE INVENTION

Hereinafter, an embodiment of the present invention will be described with reference to the attached drawings.

### [Entire Configuration of Working Machine Support Belt]

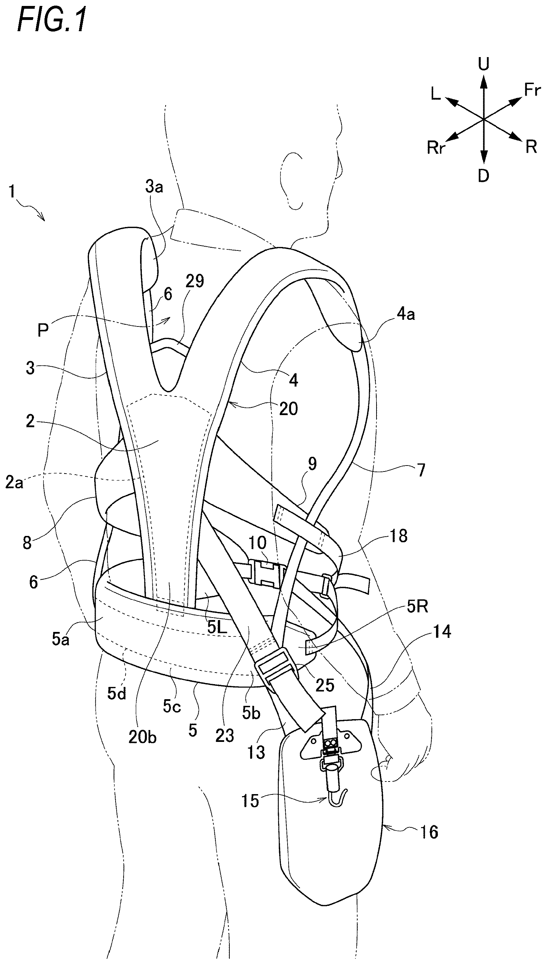

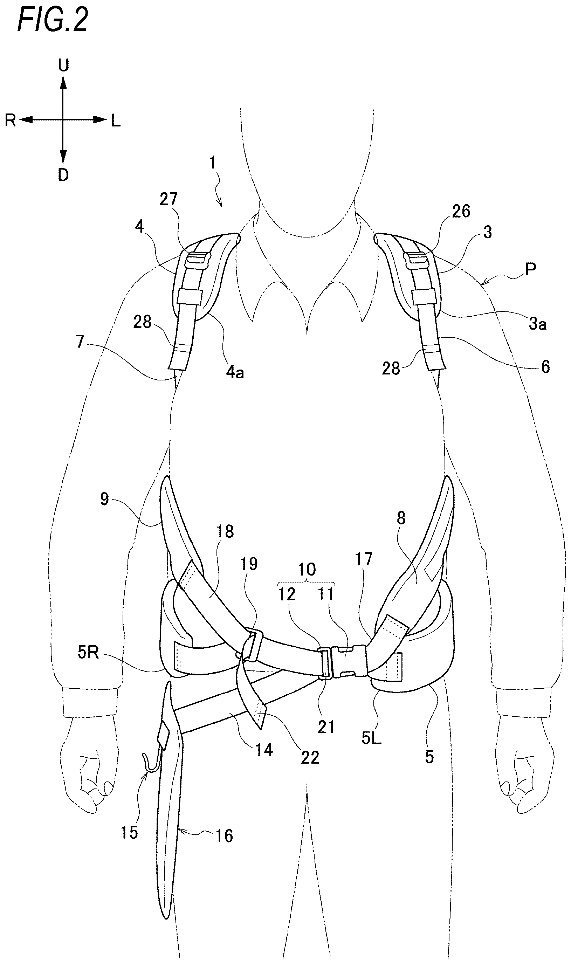

As illustrated in Figs. 1 to 3, a working machine support belt 1 of the embodiment includes: a back plate portion 2; a left shoulder belt 3 and a right shoulder belt 4 that extend upward from an upper portion of the back plate portion 2 and turn to a front part of an operator P; a waist belt 5 that extends to both sides from a lower portion of the back plate portion 2; a left suspender band 6 that connects a front lower portion 3a of the left shoulder belt 3 and a left rear portion 5a of the waist belt 5; a right suspender band 7 that connects a front lower portion 4a of the right shoulder belt 4 and the right rear portion 5b of the waist belt 5; a left side belt 8 that extends left-downward from the upper portion of the back plate portion 2, turns to the front part of the operator P, and is connected to a left end portion 5L of the waist belt 5; a right side belt 9 that extends right-downward from the upper portion of the back plate portion 2, turns to the front part of the operator P, and is connected to a right end portion 5R of the waist belt 5; a locking member 10 that locks the left end portion 5L of the waist belt 5 and the left side belt 8 which are connected to each other, and the right end portion 5R of the waist belt 5 and the right side belt 9 which are connected to each other; and a working machine pad 16 supported by the right rear portion 5b of the waist belt 5 via a rear support band 13, supported by the right end portion 5R of the waist belt 5 and the right side belt 9 which are connected to each other via a front support band 14, and provided with a hook 15 that supports a working machine (not illustrated). The back plate portion 2, the left shoulder belt 3, the right shoulder belt 4, the waist belt 5, the left side belt 8, and the right side belt 9 are made of cushion materials (not illustrated).

According to the above-described configuration, a load of the working machine can be distributed to an upper body of an operator P by the back plate portion 2, the left shoulder belt 3 and the left suspender band 6, the right shoulder belt 4 and the right suspender band 7, the left side belt 8, the right side belt 9, and the waist belt 5. Further, in the working machine support belt 1, by providing the left side belt 8 and the right side belt 9 and by locking the left end portion 5L of the waist belt 5 and the left side belt 8 which are connected to each other and the right end portion 5R of the waist belt 5 and the right side belt 9 which are connected to each other by the locking member 10, the load of the working machine can be distributed to the entire waist of the operator P, and thus, the deviation of the load that acts on the waist is reduced, and fatigue due to a local load on the body of the operator can be reduced. Further, since the back plate portion 2, the left shoulder belt 3, the right shoulder belt 4, the waist belt 5, the left side belt 8, and the right side belt 9 are made of cushion materials, the load on the operator P can further be reduced.

The left shoulder belt 3 and the right shoulder belt 4 are formed integrally with the back plate portion 2 and configure a substantially Y-shaped belt main body 20. A lower end portion 20b of the belt main body 20 is connected to a center portion 5c of the waist belt 5. The back plate portion 2 and the waist belt 5 include reinforcing members 2a and 5d made of a hard resin member inside. According to the configuration, appropriate elasticity and rigidity can be imparted to the back plate portion 2 and the waist belt 5. Further, by using a hard resin member as the reinforcing member, it is possible to manufacture the working machine support belt 1 with a lighter weight and at a lower cost compared to a case where a metal is used for the reinforcing member.

The locking member 10 of the waist belt 5 is a side release type one-touch buckle, and includes a female member 11 and a male member 12. In other words, the locking member 10 is configured such that a pair of locking pieces of the male member 12 is locked to a pair of locking recessed portions of the female member 11 by inserting the male member 12 into the female member 11, and the pair of locking pieces is disengaged from the pair of locking recessed portions by pushing the pair of locking pieces with a finger.

In addition, the working machine support belt 1 includes a reinforcing band 23 that connects the back plate portion 2 and the right rear portion 5b of the waist belt 5. The reinforcing band 23 is connected to the back plate portion 2 between a connection portion between the back plate portion 2 and the right side belt 9, and a connection portion between the back plate portion 2 and the waist belt 5.

The left end portion 5L of the waist belt 5 and the left side belt 8 are connected to each other via a left connecting band 17. The right end portion 5R of the waist belt 5 and the right side belt 9 are connected to each other via a right connecting band 18. The left connecting band 17 is provided with the female member 11 of the locking member 10, and the front support band 14 is connected to the right connecting band 18 via a first length adjusting mechanism 19. The male member 12 of the locking member 10 is connected to the front support band 14 via a second length adjusting mechanism 21.

The right rear portion 5b of the waist belt 5 is provided with a third length adjusting mechanism 25, and the rear support band 13 is connected to the third length adjusting mechanism 25. In this manner, since the front support band 14 is connected to the right connecting band 18 via the first length adjusting mechanism 19, by adjusting the length of the front support band 14, the length around the waist in the working machine support belt 1 can be adjusted.

Further, by changing a distance between the second length adjusting mechanism 21 and the working machine pad 16 in the front support band 14 and a distance between the third length adjusting mechanism 25 and the working machine pad 16 in the rear support band 13, the position of the hook 15 can be adjusted freely. In other words, by elongating both the distance between the second length adjusting mechanism 21 and the working machine pad 16 in the front support band 14 and the distance between the third length adjusting mechanism 25 and the working machine pad 16 in the rear support band 13, the position of the hook 15 can be lowered, and by shortening both the distance between the second length adjusting mechanism 21 and the working machine pad 16 in the front support band 14 and the distance between the third length adjusting mechanism 25 and the working machine pad 16 in the rear support band 13, the position of the hook 15 can be raised. Furthermore, by shortening the distance between the second length adjusting mechanism 21 and the working machine pad 16 in the front support band 14 and by elongating the distance between the third length adjusting mechanism 25 and the working machine pad 16 in the rear support band 13, the hook 15 can be moved forward, and by elongating the distance between the second length adjusting mechanism 21 and the working machine pad 16 in the front support band 14 and by shortening the distance between the third length adjusting mechanism 25 and the working machine pad 16 in the rear support band 13, the hook 15 can be moved rearward. In addition, manufacturing cost can be reduced by making the first length adjusting mechanism 19, the second length adjusting mechanism 21, and the third length adjusting mechanism 25 into highly versatile ladder locks.

Length adjusting mechanisms 26 and 27 are provided in the front lower portions 3a and 4a of the left shoulder belt 3 and the right shoulder belt 4, respectively. The left suspender band 6 is connected to the front lower portion 3a of the left shoulder belt 3 via the length adjusting mechanism 26, and the right suspender band 7 is connected to the front lower portion 4a of the right shoulder belt 4 via the length adjusting mechanism 27. According to the configuration, by adjusting the length of the left suspender band 6 using the length adjusting mechanism 26 of the left shoulder belt 3, and by adjusting the length of the right suspender band 7 using the length adjusting mechanism 27 of the right shoulder belt 4, the position of the waist belt 5 can be adjusted in accordance with the operator P. In addition, the length adjusting mechanisms 26 and 27 are ladder locks, for example.

In the left suspender band 6, a base end portion 6a is stitched to the left rear portion 5a of the waist belt 5, and a tip end portion 6b side extends from the front lower portion 3a of the left shoulder belt 3 via the length adjusting mechanism 26. In the right suspender band 7, a base end portion 7a is stitched to the right rear portion 5b of the waist belt 5, and a tip end portion 7b side extends from the front lower portion 4a of the right shoulder belt 4 via the length adjusting mechanism 27. The right suspender band 7, the rear support band 13, and the reinforcing band 23 are gathered and stitched to the right rear portion 5b of the waist belt 5 to make the stitching work and the like easy.

A left through hole 8a into which the left suspender band 6 is inserted is provided in the left side belt 8, and a right through hole 9a into which the right suspender band 7 is inserted is provided in the right side belt 9. The left through hole 8a is formed by stitching both end portions of the band member 24 to the left side belt 8. The right through hole 9a is formed by stitching one end portion 18a and a middle portion 18c of the right connecting band 18 to the right side belt 9. In this manner, by making the left suspender band 6 inserted into the left through hole 8a provided in the left side belt 8, and by making the right suspender band 7 inserted into the right through hole 9a provided in the right side belt 9, the left suspender band 6 and the right suspender band 7 can be guided to a desired position, and thus, the integrity of the working machine support belt 1 can be improved, and the load of the working machine can be appropriately distributed to the upper body of the operator P. In addition, since the right through hole 9a of the right side belt 9 into which the right suspender band 7 is inserted is configured with a part of the right connecting band 18, the number of components can be reduced.

In the front support band 14, a first end portion 14a is stitched and connected to the working machine pad 16, and a second end portion 14b side extends via the second length adjusting mechanism 21 and the first length adjusting mechanism 19. A clip 22 is provided in the second end portion 14b of the front support band 14 that serves as a free end. In this manner, since the clip 22 is provided in the second end portion 14b of the front support band 14, flapping of the front support band 14 can be prevented by holding the clip 22 between the right side belt 9 and the like.

Clips 28 are provided in the tip end portions 6b and 7b of the left suspender band 6 and the right suspender band 7, respectively. According to the configuration, flapping of the left suspender band 6 and the right suspender band 7 can be prevented by holding each clip 28 between the left suspender band 6, the right suspender band 7 and the like.

In addition, the working machine support belt 1 includes a loop band 29 that connects the left shoulder belt 3 and the right shoulder belt 4 to each other above the back plate portion 2. According to the configuration, the working machine support belt 1 can be hooked using the loop band 29 when not in use.

### [Working Machine Pad and Supporting Structure Thereof]

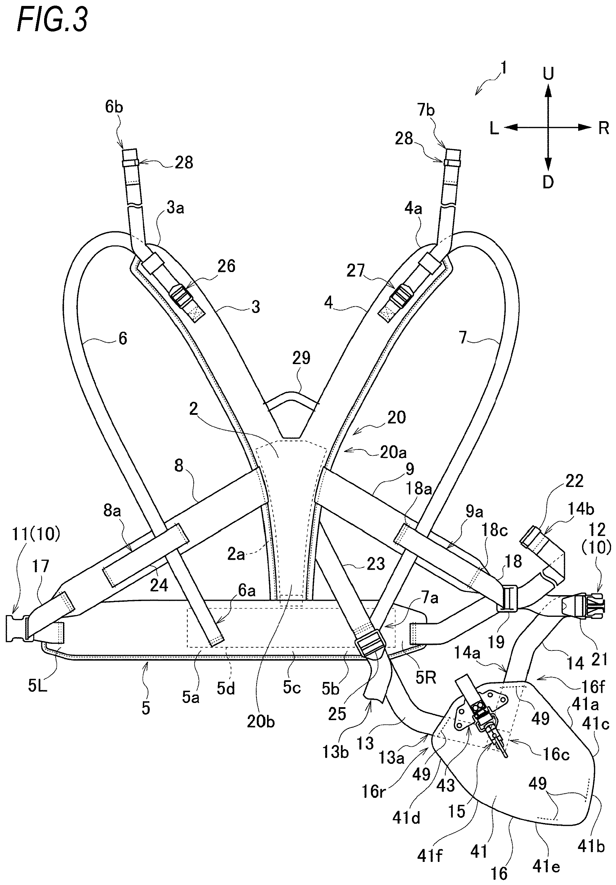

As illustrated in Fig. 3, in the front support band 14, the first end portion 14a positioned on one side with respect to the second length adjusting mechanism 21 is stitched and connected to the working machine pad 16, and the second end portion 14b positioned on the other side with respect to the second length adjusting mechanism 21 is connected to the first length adjusting mechanism 19. According to the configuration, by changing the distance between the second length adjusting mechanism 21 and the working machine pad 16 in the front support band 14, the height of the working machine pad 16 can be adjusted. In addition, by changing the distance between the first length adjusting mechanism 19 and the second length adjusting mechanism 21 in the front support band 14, the position around the waist of the working machine pad 16 can be adjusted.

In addition, in the rear support band 13, a first end portion 13a is stitched and connected to the working machine pad 16, and a second end portion 13b positioned to be opposite to the first end portion 13a is connected to the right rear portion 5b of the waist belt 5 via the third length adjusting mechanism 25. According to the configuration, by adjusting the length of the rear support band 13 by the third length adjusting mechanism 25, the height of the working machine pad 16 can be adjusted more accurately.

Further, the rear support band 13 is disposed substantially on a straight line with the reinforcing band 23. In this manner, since the reinforcing band 23 that connects the back plate portion 2 to the right rear portion 5b of the waist belt 5 is disposed substantially on a straight line with respect to the rear support band 13, the load of the working machine applied to the rear support band 13 can be appropriately received by the reinforcing band 23.

In addition, the female member 11 of the waist belt 5 is provided on the left connecting band 17, and the first length adjusting mechanism 19 is provided on the right connecting band 18. According to the configuration, the working machine pad 16 can be more stably supported by the left side belt 8 and the right side belt 9 that extend from the back plate portion 2. Further, since the rear support band 13 is connected to the waist belt 5 via the third length adjusting mechanism 25, the height of the working machine pad 16 can be adjusted more appropriately. In addition, manufacturing cost can be reduced by making the first length adjusting mechanism 19, the second length adjusting mechanism 21, and the third length adjusting mechanism 25 into a highly versatile ladder lock.

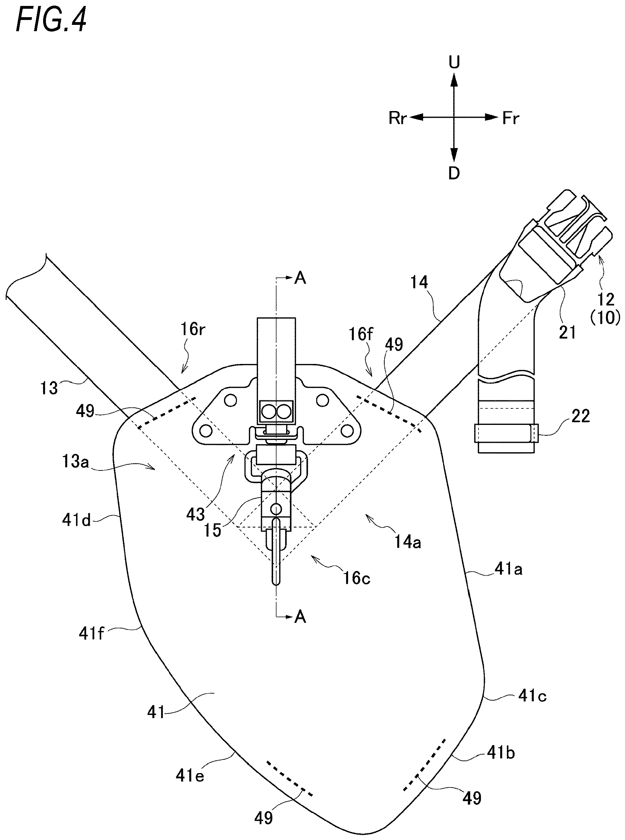

As illustrated in Fig. 4, the first end portion 14a of the front support band 14 is stitched to the upper end portion of a front portion 16f of the working machine pad 16 and is stitched at a center portion 16c of the working machine pad 16. The first end portion 13a of the rear support band 13 is stitched to the upper end portion of a rear portion 16r of the working machine pad 16 and is stitched at the center portion 16c of the working machine pad 16. In this manner, by stitching the first end portion 14a of the front support band 14 and the first end portion 13a of the rear support band 13 at the center portion 16c of the working machine pad 16, stitching work can be performed easily.

Here, the front support band 14 and the rear support band 13 may be configured separately, or may be configured with a single band member. In a case where the front support band 14 and the rear support band 13 are configured as a single band member, the band member is folded back at the center portion 16c of the working machine pad 16. By configuring the front support band 14 and the rear support band 13 as a single band member, the number of components can be reduced.

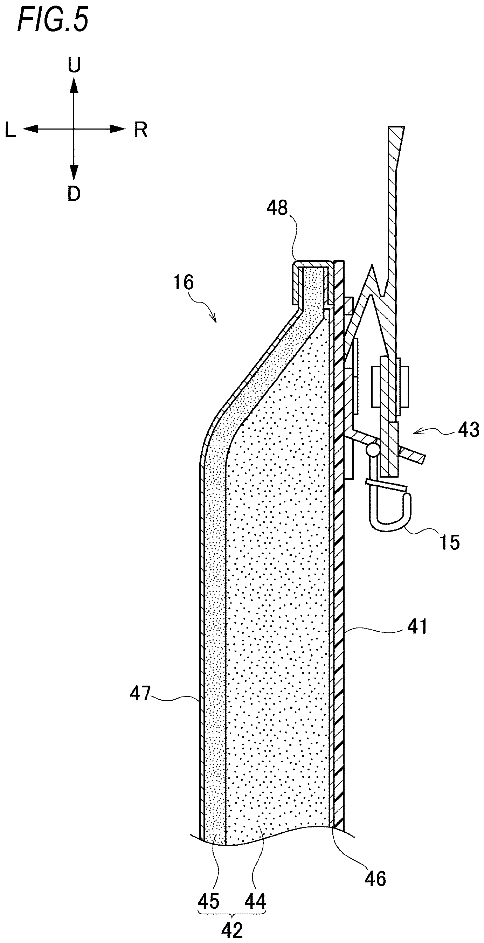

As illustrated in Fig. 5, the working machine pad 16 includes a plate portion 41 disposed on the working machine side and a cushion portion 42 disposed on the operator P side and softer than the plate portion 41, and the hook 15 is attached to an outer surface of the plate portion 41 via a fixing metal fitting 43. In this manner, since the working machine pad 16 includes the hard plate portion 41 positioned on the working machine side and the soft cushion portion 42 positioned on the operator P side, the load or vibration of the working machine can be received by the plate portion 41, and the cushion portion 42 can protect the thigh of the operator P. In other words, since the cushion portion 42 is made of a cushion material and deforms along the shape of the thigh while reducing the load or vibration of the working machine, the load on the operator P can be reduced.

As illustrated in Figs. 3 and 4, when viewed from the working machine side, the plate portion 41 includes: a first forward slope surface 41a that slopes forward as going downward; a second forward slope surface 41b that slops rearward as going downward; a forward bent portion 41c that connects the first forward slope surface 41a and the second forward slope surface 41b to each other; a first rearward surface 41d that extends substantially linearly downward; a second rearward slope surface 41e that slopes forward as going downward; and a rearward bent portion 41f that connects the first rearward surface 41d and the second rearward slope surface 41e. The forward bent portion 41c is positioned below the rearward bent portion 41f. The second rearward slope surface 41e has a steeper slope than the first forward slope surface 41a. With the configuration, in a case of a working machine provided with a handle for both hands at a front part, and in a case of a working machine provided with a handle for one hand at a front part and helped by the other hand at a rear part, the working machine pad 16 can be commonly used. In other words, by forming the circumferential edge portion of the working machine pad 16 in this manner, the working machine pad 16 can be commonly used.

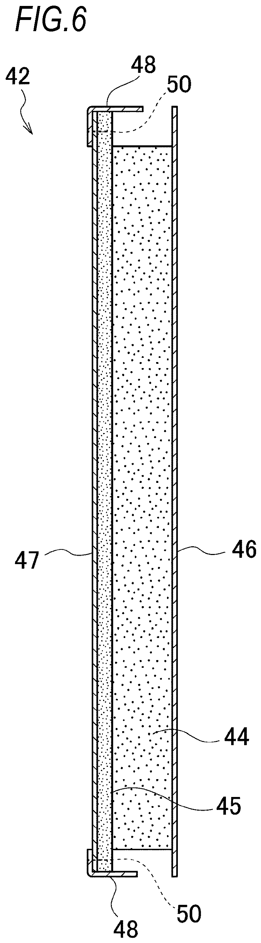

As illustrated in Figs. 5 and 6, the cushion portion 42 includes a soft cushion portion 44 and a hard cushion portion 45 that is harder than the soft cushion portion 44, and the soft cushion portion 44 is disposed between the plate portion 41 and the hard cushion portion 45. In addition, the cushion portion 42 and the plate portion 41 are integrated by stitching the circular edge portions of the hard cushion portion 45 and the plate portion 41 at a plurality of locations (in the present embodiment, four locations). The plate portion 41 is made of resin, and the soft cushion portion 44 and the hard cushion portion 45 are made of sponge. The hard cushion portion 45 is thinner than the soft cushion portion 44. The soft cushion portion 44 and the hard cushion portion 45 may be integrated by adhesion, for example.

Here, the reason why the working machine pad 16 has a three-layer structure of the resin plate portion 41, the soft cushion portion 44, and the hard cushion portion 45, will be described.

The working machine side cannot ensure durability unless the plate portion 41 is made of resin. However, since vibration is directly transmitted to the operator with a single member, an elastic body is required on the operator side. However, when the elastic body is extremely soft, the elastic body deforms extremely, then, the elastic body fits the body of the operator, but it is difficult to follow the movement of the working machine. Meanwhile, when the elastic body is hard, the elastic body does not fit the body of the operator, and thus, it is easy to follow the movement of the operator, but the vibration on the working machine is easily transmitted to the body of the operator. Here, by making the working machine pad 16 have a three-layer structure of the resin plate portion 41, the soft cushion portion 44, and the hard cushion portion 45, while ensuring durability of the working machine pad 16, both the vibration absorption performance and followability which are the characteristics that conflict with each other can be established.

In addition, the cushion portion 42 includes a first covering member 46 that covers the outer surface of the soft cushion portion 44, and a second covering member 47 that covers the outer surface of the hard cushion portion 45. With this configuration, deterioration of the soft cushion portion 44 and the hard cushion portion 45 is suppressed.

As illustrated in Fig. 6, the hard cushion portion 45 before being stitched to the plate portion 41 is larger than the soft cushion portion 44. In this manner, by making the hard cushion portion 45 larger than the soft cushion portion 44, nipping the soft cushion portion 44, and stitching the hard cushion portion 45 and the plate portion 41 to each other, the followability to the working machine is improved.

In addition, the cushion portion 42 includes a third covering member 48 having a substantially U-shaped section and interposing the outer edge portions of the hard cushion portion 45, the first covering member 46, and the second covering member 47, and the hard cushion portion 45, the first covering member 46, the second covering member 47, and the third covering member 48 are stitched to each other over the entire circumference.

More specifically, the first covering member 46 is formed to be larger than the outer surface of the soft cushion portion 44, and the second covering member 47 is formed substantially in the same shape as the outer surface of the hard cushion portion 45. In addition, by crushing the outer edge portion of the soft cushion portion 44, the outer edge portion of the hard cushion portion 45 is sandwiched between the first covering member 46 and the second covering member 47, and further, by sandwiching the outer edge portions of the hard cushion portion 45, the first covering member 46, and the second covering member 47 with the third covering member 48, the stitching is performed over the entire circumference, and accordingly, the cushion portion 42 is manufactured. In this manner, by interposing the outer edge portions of the hard cushion portion 45, the first covering member 46, and the second covering member 47 with the third covering member 48, and by stitching the members over the entire circumference, the strength of the end portion of the hard cushion portion 45 can be improved, and the durability of the working machine pad 16 can be improved. In Fig. 6, reference numeral 50 denotes the stitching portion of the hard cushion portion 45, the second covering member 47, and the third covering member 48.

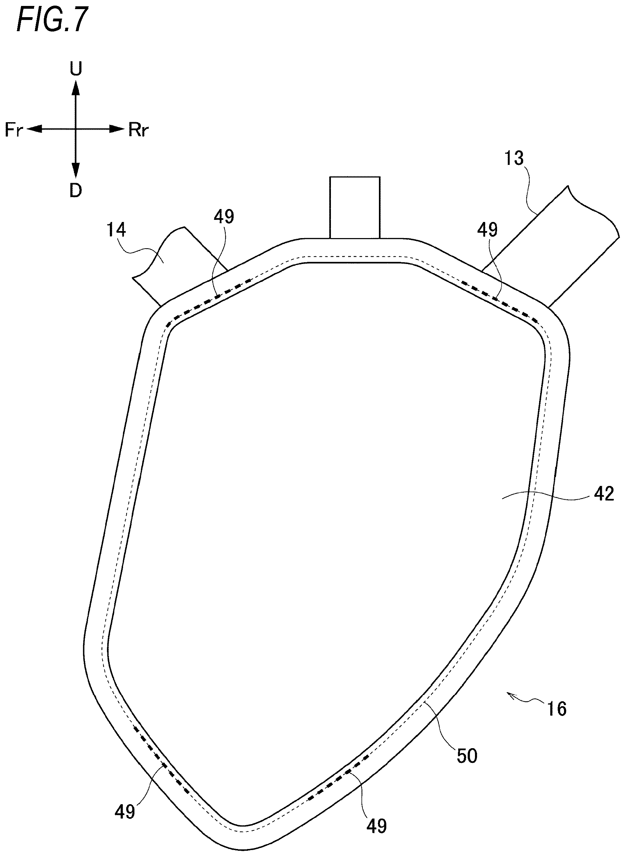

As illustrated in Fig. 7, a stitching portion 49 of the hard cushion portion 45 and the plate portion 41 is substantially at the same position as a stitching portion 50 of the hard cushion portion 45, the first covering member 46, the second covering member 47, and the third covering member 48. In this manner, by making the positions of both the stitching portions 49 and 50 the same, it is possible to suppress the deterioration of the design of the working machine pad 16 by forming the stitching portions 49 and 50.

As illustrated in Figs. 4 and 7, the stitching portion 49 of the hard cushion portion 45 and the plate portion 41 are provided at two locations on the upper and lower portions of the working machine pad 16. In this manner, by avoiding the center portion 16c of the working machine pad 16 that comes into contact with the working machine and disposing the stitching portion 49 only on the circumferential edge portion of the working machine pad 16, the deterioration of the stitching portion 49 due to contact with the working machine can be suppressed. In other words, since there is a low possibility that the working machine comes into contact with the stitching portion 49 in relation to the position of the hook 15, the deterioration of the stitching portion 49 can be suppressed.

In the example, the front support band 14 and the rear support band 13 are stitched to the upper two stitching portions 49 among four stitching portions 49 of the hard cushion portion 45 and the plate portion 41. In this manner, by stitching the front support band 14 and the rear support band 13 in the stitching portion 49 between the plate portion 41 and the cushion portion 42, the deterioration of the design of the working machine pad 16 due to the formation of the stitching portion of the front support band 14 and the rear support band 13 can be suppressed.

### [Action]

In the working machine support belt 1 configured as described above, the load of the working machine can be distributed to the upper body of the operator P by the back plate portion 2, the left shoulder belt 3 and the left suspender band 6, the right shoulder belt 4 and the right suspender band 7, the left side belt 8, the right side belt 9, and the waist belt 5. Further, in the working machine support belt 1, by providing the right side belt 9 in addition to the left side belt 8 and by locking the left end portion 5L of the waist belt 5 and the left side belt 8 which are connected to each other and the right end portion 5R of the waist belt 5 and the right side belt 9 which are connected to each other by the locking member 10, the load of the working machine can be distributed to the entire waist of the operator P, and thus, the deviation of the load that acts on the waist is reduced, and fatigue due to a local load on the body of the operator can be reduced.

In addition, since the working machine pad 16 of the working machine support belt 1 includes the hard plate portion 41 positioned on the working machine side and the soft cushion portion 42 positioned on the operator side, the load or vibration of the working machine can be received by the plate portion 41, and the cushion portion 42 can protect the thigh. In other words, since the cushion portion 42 deforms along the shape of the thigh while reducing the load or vibration of the working machine, the load on the operator can be reduced.

Furthermore, since the working machine pad 16 of the working machine support belt 1 has a three-layer structure of the resin plate portion 41, the soft cushion portion 44, and the hard cushion portion 45, while ensuring durability of the working machine pad 16, both the vibration absorption performance and followability which are the characteristics that conflict with each other can be established.

In addition, the working machine support belt 1 may be applied to a two-hand handle type mowing machine with a U-shaped handle, and may be applied to a loop handle type mowing machine in which the loop handle is held by one hand and a bar of the working machine is held by the other hand. Further, the working machine support belt 1 can be used for the working machine, such as a blower, a high-pressure washing machine, and a sprayer, in addition to a mowing machine.

### DESCRIPTION OF REFERENCE NUMERALS AND SIGNS

- 1:: working machine support belt
- 15:: hook
- 16:: working machine pad
- 16c:: center portion
- 41:: plate portion
- 41a:: first forward slope surface
- 41b:: second forward slope surface
- 41c:: forward bent portion
- 41d:: first rearward surface
- 41e:: second rearward slope surface
- 41f:: rearward bent portion
- 42:: cushion portion
- 44:: soft cushion portion
- 45:: hard cushion portion
- 46:: first covering member
- 47:: second covering member
- 48:: third covering member
- 49:: stitching portion
- 50:: stitching portion
- P:: operator

## Claims

1. A working machine pad (16) for being provided in a working machine support belt (1) so as to be interposed between a thigh of an operator (P) and a working machine, the working machine pad (16) comprising:
a plate portion (41) disposed on the working machine side;
a cushion portion (42) disposed on the operator side and softer than the plate portion (41); and
a hook (15) fixed to the plate portion (41) and capable of locking the working machine, wherein:
the cushion portion (42) includes:
a soft cushion portion (44); and
a hard cushion portion (45) harder than the soft cushion portion (44); and
the soft cushion portion (44) is disposed between the plate portion (41) and the hard cushion portion (45), and wherein
the plate portion (41) is made of resin; and
**characterized in that**
the soft cushion portion (44) and the hard cushion portion (45) are made of sponge.

2. The working machine pad (16) according to claim 1, wherein
the hard cushion portion (45) is thinner than the soft cushion portion (44).

3. The working machine pad (16) according to any one of claims 1 to 2, wherein:
the hard cushion portion (45) is larger than the soft cushion portion (44); and
the hard cushion portion (45) and the plate portion (41) are stitched to each other.

4. The working machine pad (16) according to claim 3, wherein
the cushion portion (42) further includes:
a first covering member (46) that covers an outer surface of the soft cushion portion (44); and
a second covering member (47) that covers an outer surface of the hard cushion portion (45).

5. The working machine pad (16) according to claim 4, wherein:
the cushion portion (42) further includes a third covering member (48) having a substantially U-shaped section and interposing outer edge portions of the hard cushion portion (45), the first covering member (46), and the second covering member (47); and
the hard cushion portion (45), the first covering member (46), the second covering member (47), and the third covering member (48) are stitched to each other.

6. The working machine pad (16) according to claim 5, wherein
a stitching portion (49) of the hard cushion portion (45) and the plate portion (41) has substantially the same position as a stitching portion (50) of the hard cushion portion (45), the first covering member (46), the second covering member (47), and the third covering member (48).

7. The working machine pad (16) according to claim 6, wherein
the stitching portion (49) of the hard cushion portion (45) and the plate portion (41) is provided in an upper portion and a lower portion of the working machine pad (16) to avoid a center portion (16c) of the working machine pad (16) in an up-down direction.

8. The working machine pad (16) according to any one of claims 1 to 7, wherein:
when viewed from the working machine side, the plate portion (41) includes:
a first forward slope surface (41a) that slopes forward as going downward;
a second forward slope surface (41b) that slopes rearward as going downward;
a forward bent portion (41c) that connects the first forward slope surface (41a) and the second forward slope surface (41b) to each other;
a first rearward surface (41d) that extends substantially linearly downward;
a second rearward slope surface (41e) that slopes forward as going downward; and
a rearward bent portion (41f) that connects the first rearward surface (41d) and the second rearward slope surface (41e) to each other;
the forward bent portion (41c) is positioned below the rearward bent portion (41f); and
the second rearward slope surface (41e) has a steeper slope than the first forward slope surface (41a).

## Patentansprüche

1. Kissen (16) für Arbeitsmaschine zur Bereitstellung in einem Arbeitsmaschinentragegurt (1), so dass es zwischen einem Oberschenkel einer Bedienperson (P) und einer Arbeitsmaschine angeordnet ist, wobei das Kissen (16) für die Arbeitsmaschine Folgendes umfasst:
einen auf der Seite der Arbeitsmaschine angeordneten Plattenabschnitt (41);
einen auf der Seite der Bedienperson angeordneten Kissenabschnitt (42), der weicher als der Plattenabschnitt (41) ist; und
einen Haken (15), der an dem Plattenabschnitt (41) befestigt ist und zum Einrasten der Arbeitsmaschine geeignet ist, wobei:
der Kissenabschnitt (42) Folgendes aufweist:
einen weichen Kissenabschnitt (44); und
einen harten Kissenabschnitt (45), der härter als der weiche Kissenabschnitt (44) ist; und
der weiche Kissenabschnitt (44) zwischen dem Plattenabschnitt (41) und dem harten Kissenabschnitt (45) angeordnet ist, und wobei
der Plattenabschnitt (41) aus Harz besteht; sowie
**dadurch gekennzeichnet, dass**
der weiche Kissenabschnitt (44) und der harte Kissenabschnitt (45) aus Schwamm bestehen.

2. Kissen (16) für Arbeitsmaschine nach Anspruch 1, wobei der harte Kissenabschnitt (45) dünner als der weiche Kissenabschnitt (44) ist.

3. Kissen (16) für Arbeitsmaschine nach einem der Ansprüche 1 bis 2, wobei:
der harte Kissenabschnitt (45) größer als der weiche Kissenabschnitt (44) ist; und
der harte Kissenabschnitt (45) und der Plattenabschnitt (41) miteinander vernäht sind.

4. Kissen (16) für Arbeitsmaschine nach Anspruch 3, wobei
der Kissenabschnitt (42) weiterhin Folgendes aufweist:
ein erstes Abdeckelement (46), welches eine Außenfläche des weichen Kissenabschnitts (44) abdeckt; und
ein zweites Abdeckelement (47), welches eine Außenfläche des harten Kissenabschnitts (45) abdeckt.

5. Kissen (16) für Arbeitsmaschine nach Anspruch 4, wobei:
der Kissenabschnitt (42) weiterhin ein drittes Abdeckelement (48) aufweist, das einen im Wesentlichen U-förmigen Querschnitt hat und äußere Randabschnitte des harten Kissenabschnitts (45), des ersten Abdeckelements (46) und des zweiten Abdeckelements (47) einfügt; und
der harte Kissenabschnitt (45), das erste Abdeckelement (46), das zweite Abdeckelement (47) und das dritte Abdeckelement (48) miteinander vernäht sind.

6. Kissen (16) für Arbeitsmaschine nach Anspruch 5, wobei
ein Nahtabschnitt (49) des harten Kissenabschnitts (45) und des Plattenabschnitts (41) im Wesentlichen dieselbe Position wie ein Nahtabschnitt (50) des harten Kissenabschnitts (45), des ersten Abdeckelements (46), des zweiten Abdeckelements (47) und des dritten Abdeckelements (48) aufweist.

7. Kissen (16) für Arbeitsmaschine nach Anspruch 6, wobei
der Nahtabschnitt (49) des harten Kissenabschnitts (45) und des Plattenabschnitts (41) in einem oberen Abschnitt und einem unteren Abschnitt des Kissens (16) für die Arbeitsmaschine vorgesehen ist, um einen Mittelabschnitt (16c) des Kissens (16) für die Arbeitsmaschine in einer Richtung von oben nach unten zu vermeiden.

8. Kissen (16) für Arbeitsmaschine nach einem der Ansprüche 1 bis 7, wobei:
bei Betrachtung von der Arbeitsmaschinenseite aus, der Plattenabschnitt (41) Folgendes aufweist:
eine erste nach vorne geneigte Fläche (41a), die sich nach vorne und nach unten neigt;
eine zweite nach vorne geneigte Fläche (41b), die sich nach hinten und nach unten neigt;
einen nach vorne gebogenen Abschnitt (41c), der die erste nach vorne geneigte Fläche (41a) und die zweite nach vorne geneigte Fläche (41b) miteinander verbindet;
eine erste hintere Fläche (41d), die sich im Wesentlichen geradlinig nach unten erstreckt;
eine zweite nach hinten geneigte Fläche (41e), die sich nach vorne und nach unten neigt; sowie
einen nach hinten gebogenen Abschnitt (41f), der die erste hintere Fläche (41d) und die zweite nach hinten geneigte Fläche (41e) miteinander verbindet;
der nach vorne gebogene Abschnitt (41c) unter dem nach hinten gebogenen Abschnitt (41f) positioniert ist; und
die zweite nach hinten geneigte Fläche (41e) eine stärkere Neigung als die erste nach vorne geneigte Fläche (41a) aufweist.

## Revendications

1. Rembourrage de machine de travail (16) destiné à être prévu dans une sangle de support de machine de travail (1) de façon à être intercalé entre une cuisse d'un opérateur (P) et une machine de travail, le rembourrage de machine de travail (16) comprenant :
une portion de plaque (41) disposée sur le côté machine de travail ;
une portion de coussinet (42) disposée sur le côté opérateur et plus souple que la portion de plaque (41) ; et
un crochet (15) fixé à la portion de plaque (41) et capable de verrouiller la machine de travail, dans lequel :
la portion de coussinet (42) comporte :
une portion de coussinet souple (44) ; et
une portion de coussinet dure (45) plus dure que la portion de coussinet souple (44) ; et
la portion de coussinet souple (44) est disposée entre la portion de plaque (41) et la portion de coussinet dure (45), et dans lequel
la portion de plaque (41) est constituée de résine ; et
**caractérisé en ce que**
la portion de coussinet souple (44) et la portion de coussinet dure (45) sont constituées d'éponge.

2. Rembourrage de machine de travail (16) selon la revendication 1, dans lequel
la portion de coussinet dure (45) est plus mince que la portion de coussinet souple (44).

3. Rembourrage de machine de travail (16) selon l'une quelconque des revendications 1 et 2, dans lequel :
la portion de coussinet dure (45) est plus grande que la portion de coussinet souple (44) ; et
la portion de coussinet dure (45) et la portion de plaque (41) sont cousues l'une à l'autre.

4. Rembourrage de machine de travail (16) selon la revendication 3, dans lequel la portion de coussinet (42) comporte en outre :
un premier organe couvrant (46) qui couvre une surface externe de la portion de coussinet souple (44) ; et
un deuxième organe couvrant (47) qui couvre une surface externe de la portion de coussinet dure (45).

5. Rembourrage de machine de travail (16) selon la revendication 4, dans lequel :
la portion de coussinet (42) comporte en outre un troisième organe couvrant (48) ayant une section sensiblement en forme de U et intercalant des portions de bord externe de la portion de coussinet dure (45), du premier organe couvrant (46), et du deuxième organe couvrant (47) ; et
la portion de coussinet dure (45), le premier organe couvrant (46), le deuxième organe couvrant (47), et le troisième organe couvrant (48) sont cousus les uns aux autres.

6. Rembourrage de machine de travail (16) selon la revendication 5, dans lequel
une portion de couture (49) de la portion de coussinet dure (45) et de la portion de plaque (41) a sensiblement la même position qu'une portion de couture (50) de la portion de coussinet dure (45), du premier organe couvrant (46), du deuxième organe couvrant (47), et du troisième organe couvrant (48).

7. Rembourrage de machine de travail (16) selon la revendication 6, dans lequel
la portion de couture (49) de la portion de coussinet dure (45) et de la portion de plaque (41) est prévue dans une portion supérieure et une portion inférieure du rembourrage de machine de travail (16) pour éviter une portion centrale (16c) du rembourrage de machine de travail (16) dans une direction de haut en bas.

8. Rembourrage de machine de travail (16) selon l'une quelconque des revendications 1 à 7, dans lequel :
vue depuis le côté machine de travail, la portion de plaque (41) comporte :
une première surface de pente vers l'avant (41a) qui est en pente vers l'avant en allant vers le bas ;
une deuxième surface de pente vers l'avant (41b) qui est en pente vers l'arrière en allant vers le bas ;
une portion courbée vers l'avant (41c) qui relie la première surface de pente vers l'avant (41a) et la deuxième surface de pente vers l'avant (41b) l'une à l'autre ;
une première surface vers l'arrière (41d) qui s'étend de façon sensiblement linéaire vers le bas ;
une deuxième surface de pente vers l'arrière (41e) qui est en pente vers l'avant en allant vers le bas ; et
une portion courbée vers l'arrière (41f) qui relie la première surface vers l'arrière (41d) et la deuxième surface de pente vers l'arrière (41e) l'une à l'autre ;
la portion courbée vers l'avant (41c) est positionnée en dessous de la portion courbée vers l'arrière (41f) ; et
la deuxième surface de pente vers l'arrière (41e) a une pente plus abrupte que la première surface de pente vers l'avant (41a).
